# FASCICULE DE BREVET EUROPEEN

(11) **EP 3 792 143 B1**
(45) Date de publication et mention de la délivrance du brevet: **05.06.2024**
(21) Numéro de dépôt: 20193208.4
(22) Date de dépôt: 27.08.2020
(51) Int. Cl.: B62B 1/20, B62B 5/06

(54) **BROUETTE MUNIE D'UN ENSEMBLE DE PREHENSION PIVOTANT**
SCHUBKARRE, DIE MIT EINER SCHWENKBAREN GREIFANORDNUNG AUSGESTATTET IST
WHEELBARROW PROVIDED WITH A PIVOTING GRIPPING ASSEMBLY

(30) Priorité: 16.09.2019 FR 1910194
(43) Date de publication de la demande: 17.03.2021
(73) Titulaire: CDH Group, 27610 Romilly sur Andelle (FR)
(72) Inventeur: ESTEVE, Christophe, 27610 Romilly-sur-Andelle (FR)
(74) Mandataire: Demulsant, Xavier

(56) Documents cités:
- EP-A1- 2 039 584
- DE-A1-102014 002 237
- US-A1- 2011 272 924
- US-B1- 10 040 466

## Description

L'invention a trait au domaine des brouettes, et plus particulièrement aux brouettes munies d'un ensemble de préhension pivotant.

Par brouette, il faut entendre un appareil de manutention monté sur une ou plusieurs roues, muni de deux brancards permettant sa préhension par l'utilisateur, et comprenant un contenant destiné à recevoir une charge à déplacer d'un endroit à un autre.

Lors du transport de charge, le travailleur soulève la charge à l'aide de poignées disposées à l'extrémité des brancards, puis exerce un effort pour déplacer la brouette et la maintenir en mouvement. Il doit de plus maintenir l'équilibre de la charge sur la roue avant.

Les brouettes, usant l'effet de levier, permettent le déplacement de charges qui n'auraient pas pu être portées à la main. De ce fait, les brouettes sont très fréquemment employées, tant par les professionnels que les particuliers.

Cependant, les brouettes présentent l'inconvénient d'être relativement encombrantes, notamment par les brancards, qui s'étendent au-delà du contenant.

Un tel encombrement peut être gênant pour l'utilisateur pour le stockage de la brouette, que le stockage soit de courte durée, par exemple dans un véhicule, ou de durée plus longue, comme l'entreposage dans un local ou une pièce d'un bâtiment.

Un tel encombrement est également désavantageux pour le fabricant et les revendeurs, notamment lors du transport et de l'entreposage des brouettes.

Afin de résoudre une telle problématique, il a été proposé de rendre les brancards rétractables. Ainsi, le document WO 2005051744 A2 (Union-Tools) décrit une brouette repliable munie de brancards télescopiques coulissants. La rétraction de tels brancards permet d'obtenir une brouette présentant une configuration compacte. Cependant, un tel système télescopique peut se bloquer en cas de déformation des brancards, et risque de se retrouver en arc-boutement. Par ailleurs, la rétraction des brancards peut également devenir impossible si des crasses ou des poussières s'introduisent dans la partie coulissante.

Il est également connu de réduire l'encombrement d'une brouette en vue de son stockage en son transport en rendant les brancards pliables.

Ainsi, le document US 3722904 (Puckett) propose une brouette pliante, les brancards d'une telle brouette étant pliant. Cependant, afin de replier les brancards, il est nécessaire de rapprocher les brancards entre eux, puis de les replier. Une telle opération peut s'avérer contraignante, en particulier si fréquemment répétée.

Le document US 2011/272294 décrit une brouette comprenant un frein et un mécanisme de verrouillage de la cuve. L'actionnement d'une gâchette permet le pivotement des brancards par rapport au reste du châssis, les poignées passant d'une position horizontale à une position sensiblement verticale.

Le document DE 102014002237 décrit une brouette comprenant un ensemble pied et brancards monté pivotant par rapport au support de cuve, et à roue pivotante, la roue pouvant être placée parallèlement à la cuve, en position de stockage de la brouette, par exemple dans le coffre d'un véhicule. L'invention se propose de répondre aux inconvénients précités.

Un premier objet de l'invention est de proposer une brouette munie d'un ensemble pliant, permettant de limiter l'encombrement de la brouette.

Un deuxième objet de l'invention est de proposer une telle brouette munie d'un tel système pliant, le pliage et dépliage d'un tel système étant réalisable en un minimum d'opérations et sans outil.

Un troisième objet de l'invention est de proposer une telle brouette munie d'un tel système pliant, l'emploi du système pliant n'ayant aucun impact quant à la manipulation de la brouette lors d'un transport de charge.

A cet effet, il est proposé selon l'invention une brouette selon la revendication 1. Des modes de réalisation préférés de l'invention sont définis dans les revendications dépendantes.

Grâce à l'ensemble de préhension, la brouette peut être rendue compacte, en un nombre minimal d'opérations, sans outils, et sans nécessiter d'apprentissage particulier.

Diverses caractéristiques supplémentaires peuvent être prévues
- la brouette comprend un moyen de verrouillage, apte à maintenir plaqué l'ensemble de préhension contre le châssis, l'ensemble de préhension étant solidaire du châssis lorsque disposé en position dépliée ;
- le châssis comprend une partie extrême, le moyen de verrouillage étant monté pivotant selon un axe transversal passant par la partie extrême ;
- le moyen de verrouillage comprend une portion de retenue, la portion de retenue étant apte à encliqueter l'ensemble de préhension lorsque l'ensemble de préhension passe de la configuration dépliée à la configuration repliée ;
- le châssis comprend un segment de liaison, la portion de retenue définit une face arquée complémentaire au profil du segment de liaison de sorte à permettre au moyen de verrouillage de s'encliqueter sur l'ensemble de préhension ;
- le moyen de verrouillage comprend une portion amincie disposée à l'opposé de la portion de retenue ;
- le moyen de verrouillage comprend un moyen de rappel exerçant un couple visant à rapprocher le moyen de verrouillage du châssis ;
- l'ensemble de préhension ainsi que le châssis sont réalisés à partir de sections profilées tubulaires de même diamètre.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 représente une vue schématique en perspective d'une brouette munie d'un ensemble de préhension, l'ensemble étant en position dépliée,
- la figure 2 représente une vue schématique de dessus de la brouette, l'ensemble étant en position dépliée,
- la figure 3 représente une vue partielle schématique de la brouette munie de l'ensemble en position dépliée, la brouette étant représentée sans contenant,
- la figure 4 représente une vue schématique latérale de la brouette, l'ensemble étant en position dépliée,
- la figure 5 représente une vue schématique en coupe partielle de la brouette, l'ensemble étant en position dépliée,
- la figure 6 représente une vue schématique latérale de la brouette, l'ensemble étant en position repliée,
- la figure 7 représente une vue schématique en coupe partielle de la brouette, l'ensemble étant en position repliée.

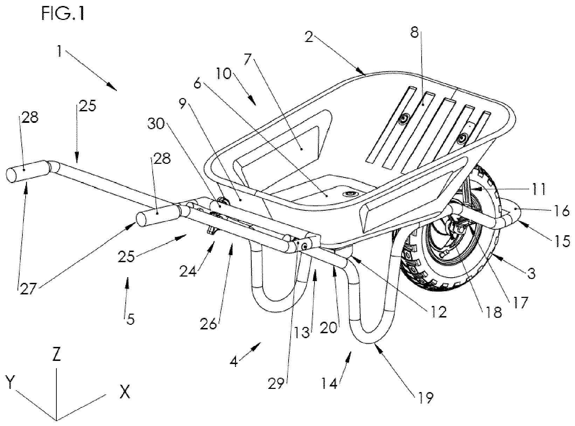

L'on se réfère à la figure 1 représentant un exemple de brouette **1** comprenant plusieurs sous-ensemble, à savoir un contenant **2,** au moins une roue **3,** un châssis **4,** ainsi qu'un ensemble **5** de préhension.

L'ensemble **5** de préhension est monté pivotant par rapport au châssis **4** de manière à évoluer entre une position dépliée et repliée.

En position dépliée, comme représenté sur les figures 1, 2, 4 et 5, la brouette **1** est saisissable par l'utilisateur en vue de son chargement, son déplacement et le déversement d'une charge placée dans le contenant **2.**

En position repliée, la brouette **1** présente un encombrement réduit, permettant son stockage dans un local à volume réduit ou dans un véhicule, par exemple un coffre de véhicule.

De manière générale, la brouette **1** est destinée à recevoir une charge dans le contenant **2.** La roue **3** est montée pivotante sur le châssis **4,** ce qui permet de faire rouler la brouette **1,** et de transporter une charge, par exemple des matériaux (terre, gravats, sable) ou des outils à un site de destination. La brouette **1** lorsque déplacée sur une roue **3** est en configuration de roulage.

Le contenant **2** comprend avantageusement un fond **6,** des flancs **7** latéraux, un flanc **8** avant et un flanc **9** arrière, de sorte à conférer au contenant **2** une forme de trémie munie d'une ouverture **10** afin de permettre le remplissage, le roulage et le déchargement (par exemple par versage) d'une charge de manière sécurisée. Lorsque l'ouverture **10** est libre, pour permettre le remplissage du contenant **2,** la brouette **1** est en configuration de chargement.

Le contenant **2** est avantageusement réalisé en matériau métallique, par exemple acier ou alliage d'aluminium, mais dans d'autres modes de réalisation, le contenant **2** est réalisé en matériau polymère ou en composite, permettant de réduire le poids de la brouette **1.**

Généralement, la charge est retirée de la brouette **1** soit par l'ouverture **10,** soit par versement, c'est-à-dire en faisant glisser la charge sur le flanc **8** avant de la brouette **1.** La brouette **1** est alors en configuration de déversement.

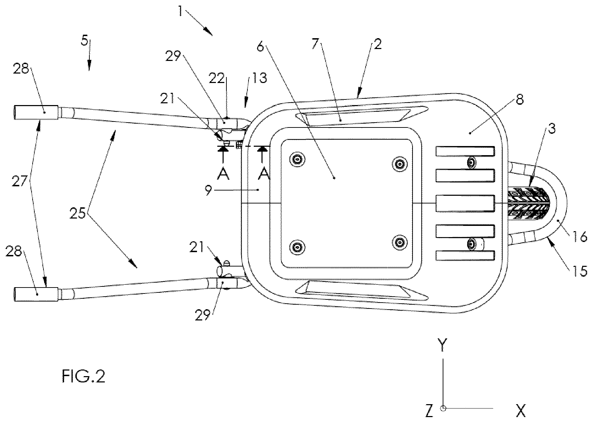

L'on décrit à présent structurellement un exemple de réalisation, en se référant plus particulièrement aux figures 1 et 2.

Tel que représenté, le contenant **2** est solidaire du châssis **4,** par exemple par vissage, rivetage ou soudage. De manière à reprendre les efforts exercés sur le contenant **2** en particulier lors de l'opération de versement de la charge, la brouette **1** comprend des supports **11** avant disposés entre le flanc **8** avant et le châssis **4.** Des supports **12** arrières sont agencés entre le fond **6** et le châssis **4,** permettant une répartition homogène des efforts entre le contenant **2** et le châssis **4.**

L'on définit par rapport à la brouette **1** un repère orthogonal XYZ formant un trièdre, comprenant trois axes perpendiculaires deux à deux, à savoir :
un axe X, définissant une direction longitudinale, horizontale,
un axe Y, définissant une direction transversale, horizontale, qui avec l'axe X définit un plan XY horizontal, sensiblement confondu avec le fond **6** lorsque la brouette est en configuration de chargement,
un axe Z, définissant une direction verticale, perpendiculaire au plan XY horizontal.

La roue **3** peut être une roue pleine, une roue gonflée ou une roue increvable. La roue **3** peut comporter des jantes, notamment métalliques, ou bien encore un flasque. La roue **3** comporte avantageusement des roulements à billes ou à rouleaux, pour un confort à l'utilisation.

Le châssis **4** se présente avantageusement sous la forme d'un tube métallique continu sinueux, symétrique par rapport à un plan vertical passant par le milieu du fond **6,** permettant d'obtenir une brouette **1** équilibrée.

Le châssis **4** comprend avantageusement une partie **13** extrême, une partie **14** de pied, et une partie **15** avant.

Dans le mode de réalisation représenté, la partie **15** avant comprend notamment un segment **16** courbé ayant une fonction de butoir, destiné à protéger la roue contre les chocs.

La partie **15** avant comprend avantageusement des organes **17** de support destinés à permettre la solidarisation d'un système **18** rotatif permettant le montage de la roue **3.**

La partie **14** de pied comprend avantageusement des segments **19** de pied courbés permettant de soutenir la brouette sur le sol.

La partie **13** extrême inclut avantageusement deux bras **20** s'étendant par exemple respectivement à partir des segments **19** de pieds. Les bras **20** s'étendent de manière avantageuse en diagonale, c'est-à-dire définissent un angle aigu avec le sol lorsque la brouette 1 est en configuration de chargement.

Avantageusement, les bras **20** ne s'étendent pas au-delà du contenant, c'est-à-dire que la projection orthogonale sur un plan transversal des bras **20** est inférieure à la projection orthogonale du contenant **2** sur un plan transversal. Ainsi, lorsque l'ensemble **5** de préhension est en configuration repliée, la brouette **1** occupe un volume minimal.

Les bras **20** comprennent avantageusement des segments **21** extrêmes, munis par exemple de bouchon pour protéger le châssis d'intrusion de corps étrangers comme la poussière ou de l'humidité.

Les segments **21** extrêmes sont avantageusement perforés, afin de permettre la mise en place d'axes **22,** permettant de former une liaison pivot entre le châssis **4** et l'ensemble **5** de préhension.

La partie **13** extrême comprend avantageusement un trou (non visible sur les figures) destiné à mettre en place par exemple une tige **23** afin de positionner un moyen **24** de verrouillage, permettant de maintenir en position l'ensemble **5** de préhension par rapport au châssis **4.**

L'ensemble **5** de préhension se présente avantageusement sous la forme d'un tube métallique continu sinueux, symétrique par rapport à un plan vertical passant par le milieu du fond **6,** permettant à l'utilisateur de saisir la brouette **1** de manière équilibrée.

L'ensemble **5** de préhension comprend avantageusement deux brancards **25** reliés ensemble par un moyen **26** de liaison, l'ensemble formant une structure monobloc, d'un seul tenant. De cette manière, il suffit de déplacer un brancard **25** pour que l'autre brancard **25** se déplace également, ce qui permet de faciliter le déplacement de l'ensemble **5** de préhension. La brouette **1** est ainsi facilement mise en position repliée, la brouette **1** pouvant être rendue compacte en un minimum d'opération, et donc rapidement.

Par ailleurs le fait d'avoir un ensemble **5** de préhension monobloc permet de rendre un tel ensemble **5** de préhension rigide. Les déformations lors du déplacement de la brouette **1** sont ainsi limitées.

Dans le mode de réalisation représenté, les brancards **25** comprennent chacun une poignée **27** permettant de saisir l'ensemble **5** de préhension, et ainsi de guider la brouette **1.** Chacune des poignées **27** sont avantageusement revêtues d'un embout **28,** réalisé par exemple en matériau polymère, tel que du caoutchouc synthétique, ou du PVC, ce qui permet de donner à l'utilisateur une sensation de confort lors de l'utilisation de la brouette en configuration de roulage par exemple.

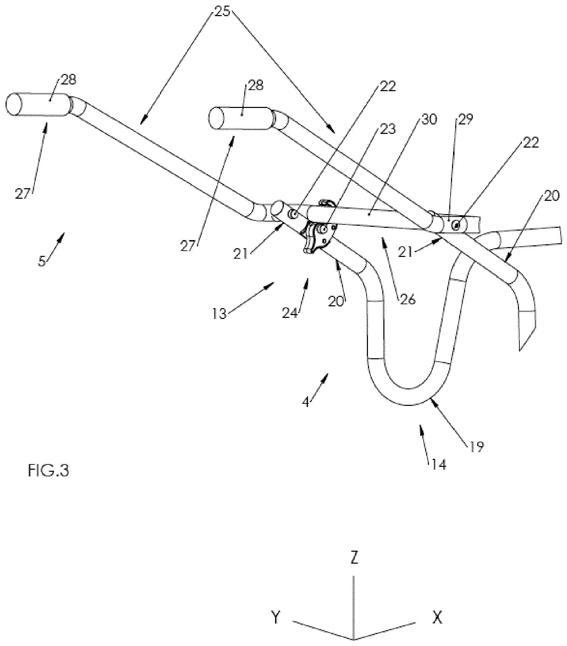

Comme représenté à titre d'exemple sur la figure 3, le moyen **26** de liaison comprend deux segments **29** de pivot reliés par un segment **30** de liaison. Plus précisément, chaque segment **29** de pivot s'étend à partir de chaque extrémité du segment **30** de liaison, conférant au moyen de liaison sensiblement une forme de U.

Le segment **30** de liaison présentant avantageusement une dimension transversale supérieure à l'écartement entre les bras **20,** le moyen **26** de liaison encadre les bras **20.** Autrement dit, la distance transversale entre les brancards **25** est supérieure à l'encombrement transversal du châssis, de sorte que les brancards **25** s'étendent de part et d'autre du châssis **4.** De cette manière, le moyen **26** de liaison, et par extension l'ensemble **5** de préhension peut prendre appui sur les bras **20,** donc sur le châssis **4.** De cette façon, le châssis **4** porte la charge en deux localisations distinctes, se situant par exemple à l'intersection entre le moyen **26** de liaison, et les bras **20.** La rigidité de la brouette **1** est de cette façon accrue.

Dans le mode de réalisation représenté, les segments **29** de pivot s'étendent sensiblement dans le même plan que chacun des brancards **25** respectifs. La direction d'extension de chacun des segments **29** de pivot définit un angle avec la direction d'extension des brancards **25.** Un tel angle permet de donner au brancard **25** une direction sensiblement identique à des brancards d'une brouette ne comportant pas d'ensemble **5** de préhension pivotant. De cette façon, l'emploi de l'ensemble **5** de préhension n'a pas d'impact sur l'utilisation et la conduite de la brouette **1** pendant le roulage.

De manière avantageuse, un segment **29** de pivot est perforé, permettant l'insertion de l'axe **22** afin de former une articulation avec le châssis **4,** au niveau du segment **21** extrême. Préférentiellement, deux articulations sont réalisées entre l'ensemble **5** de préhension et le châssis **4,** pour des raisons de robustesse et pour faciliter le pivotement.

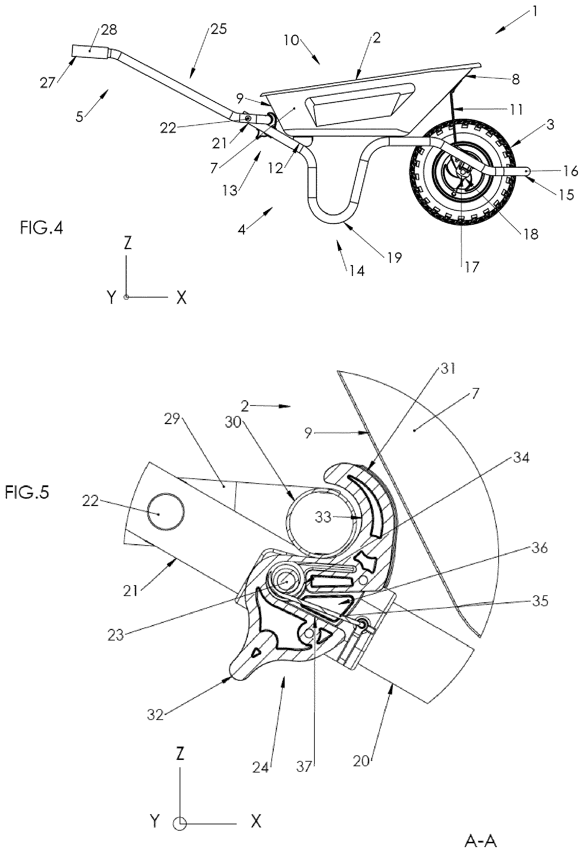

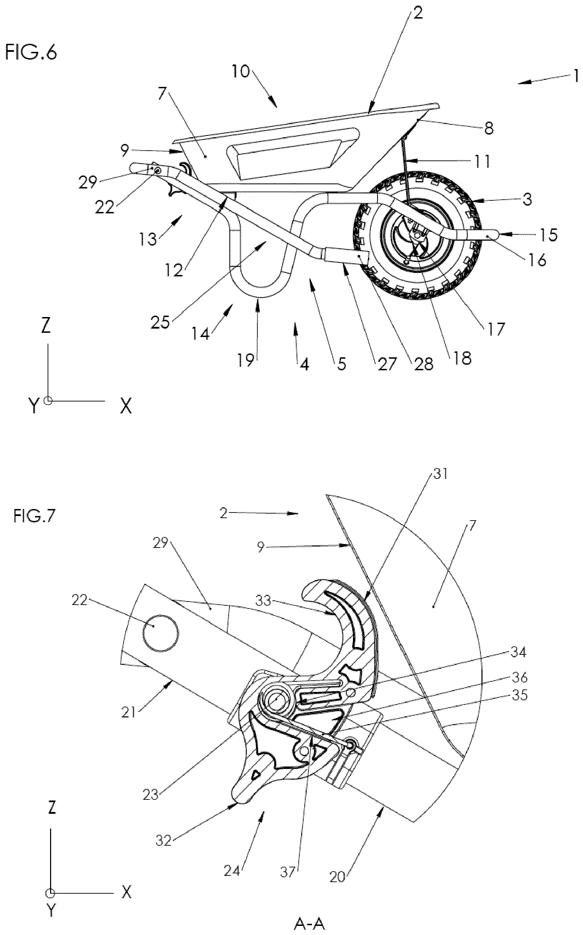

L'on décrit maintenant le moyen **24** de verrouillage, en se référant plus particulièrement aux figures 5 et 7. Le moyen **24** de verrouillage évolue entre une position ouverte, illustrée figure 5 et une position fermée, comme représenté notamment sur la figure 7.

Dans le mode de réalisation représenté, le moyen **24** de verrouillage est articulé sur la partie **13** extrême, par exemple sur un segment **21** extrême, de façon à être pivotant selon un axe transversal passant par la partie **13** extrême, par exemple sur le segment **21** extrême.

Le moyen **24** de verrouillage se présente par exemple sous la forme d'une pièce comprenant une portion **31** de retenue, ainsi qu'une portion **32** amincie, disposée avantageusement à l'opposé de la portion **31** de retenue.

Avantageusement, le moyen **24** de verrouillage est à encliquetage, permettant le passage de l'ensemble **5** de préhension d'une configuration dépliée à une configuration repliée. La portion **31** de retenue est destinée à encliqueter l'ensemble **5** de préhension, par exemple sur le segment **30** de liaison. La portion **32** amincie offre une prise permettant le déplacement du moyen **24** de verrouillage.

Afin de permettre le blocage de l'ensemble **5** de préhension contre les brancards **25,** la portion **31** de retenue comprend une face **33** arquée complémentaire au profil du segment **30** de liaison. De cette manière, l'ensemble **5** de préhension peut être agrippé par le moyen **24** de verrouillage et plaqué contre les brancards **25,** ce qui permet de maintenir en position l'ensemble **5** de préhension en position dépliée.

Le moyen **24** de verrouillage comprend un moyen de serrage, évitant un déplacement du moyen de verrouillage, de sorte à permettre le maintien en position fermée du moyen **24** de verrouillage.

De manière avantageuse et comme représenté figure 4, le moyen de serrage est un moyen de rappel, tel qu'un ressort **34** de torsion exerçant un couple visant à rapprocher le moyen **24** de verrouillage du brancard **25** du châssis, en particulier de la partie **13** extrême. De cette façon, le segment **30** de liaison est pris en sandwich, pris en étau entre le moyen **24** de verrouillage et le châssis **4.** Par adhérence, le segment **30** de liaison ne peut ressortir d'une telle position, évitant l'usage d'outil pour permettre de réaliser le dépliage et le maintien en position dépliée de l'ensemble **5** de préhension.

Le ressort **34** de torsion est avantageusement disposé à l'intérieur du moyen **24** de verrouillage. De cette manière, le ressort **34** de torsion n'est pas apparent pour l'utilisateur, évitant tout risque de détérioration voire d'accident, par exemple le coincement de doigts.

Le ressort **34** de torsion présente avantageusement une section **35** extrême, disposée au sein d'une cavité **36** ménagé dans le moyen **24** de verrouillage. Une telle cavité présente un bord **37** de butée, destinée à entrer en contact avec la section **35** extrême. De cette façon, la rotation du moyen **24** de verrouillage est arrêtée. De cette manière, en position fermée, le moyen **24** de verrouillage n'est pas complètement rabattu, facilitant le passage de l'ensemble **5** de préhension de la position dépliée à repliée comme décrit ci-dessous.

L'on décrit à présent des exemples d'utilisation d'une brouette munie de l'ensemble **5** de préhension tel que décrit ci-dessus en se référant aux figures 4 à 7.

Sur les figures 4 et 5, l'ensemble **5** de préhension est en position dépliée. Grâce au moyen **24** de verrouillage du mode de réalisation représenté, l'ensemble **5** de préhension est encliqueté automatiquement en position dépliée.

En appuyant sur la portion **32** amincie à l'aide d'une première main, l'utilisateur écarte le moyen **24** de verrouillage du segment **30** de liaison, et d'une deuxième main pivote l'ensemble **5** de préhension, qui peut se retrouver en position repliée. La brouette **1** est ainsi dans une configuration de stockage, et occupe un volume réduit par rapport au volume occupé en configuration de roulage.

L'utilisateur peut retourner la brouette en positionnant l'ouverture **10** directement en regard du sol, permettant de maintenir par gravité l'ensemble **5** de préhension en butée contre le contenant **2.**

A partir de la configuration de stockage, l'utilisateur peut d'une main saisir l'ensemble **5** de préhension, et entraîner le pivotement de l'ensemble **5** de préhension. Le pivotement est effectué en éloignant les brancards **25** de la roue **3.** Le segment de liaison entre alors en contact de la portion **31** de retenue, entraînant par poussée le moyen **24** de verrouillage en rotation. Une telle poussée permet de positionner le moyen **24** de verrouillage en position ouverte, permettant l'encliquetage de l'ensemble **5** de préhension.

Une telle opération peut être réalisée d'une seul main, et en un seul geste.

Une telle opération est réalisable lorsque la brouette **1** est retournée, c'est-à-dire lorsque l'ouverture **10** est directement en regard avec le sol.

La brouette **1** telle que présentée, ainsi que l'ensemble **5** de préhension offrent notamment les avantages suivant:
- facilité de manipulation de l'ensemble de préhension, sans outil, et sans nécessité d'apprentissage préalable,
- simplicité du moyen **24** de verrouillage, nécessitant un nombre réduit de pièce,
- risque d'accident limité par exemple par pincement.

## Revendications

1. Brouette (1) comprenant:
un châssis (4) destiné à recevoir un contenant (2) apte à recevoir une charge,
une roue (3) apte à pivoter par rapport au châssis (4), de sorte à permettre le roulage de la brouette (1),
un ensemble (5) de préhension pivotant par rapport au châssis (4), évoluant entre une position dépliée apte à permettre le roulage de la brouette (1) par l'utilisateur, et une position repliée, l'ensemble (5) de préhension comprenant deux brancards (25) reliés par l'intermédiaire d'un moyen (26) de liaison, l'ensemble (5) de préhension présentant sensiblement une forme de U, l'ensemble (5) de préhension étant monobloc,
le châssis (4) se présente sous la forme d'un tube métallique continu, le châssis (4) comprenant une partie (13) extrême, une partie (14) de pied et une partie (15) avant, la partie (14) de pied comprenant des segments (19) de pied courbés permettant de soutenir la brouette sur le sol, la partie extrême incluant deux bras (20) s'étendant à partir des segments (19) de pied,
la distance transversale entre les brancards (25) est supérieure à l'encombrement transversal du châssis (4), de sorte que les brancards (25) s'étendent de part et d'autre du châssis (4), l'ensemble (5) de préhension étant en butée contre le châssis (4) en deux localisations distinctes lorsque l'ensemble (5) de préhension est configuration repliée.

2. Brouette **(1)** selon la revendication précédente, **caractérisée en ce que** la brouette **(1)** comprend un moyen **(24)** de verrouillage, apte à maintenir plaqué l'ensemble **(5)** de préhension contre le châssis **(4),** l'ensemble **(5)** de préhension étant solidaire du châssis **(4)** lorsque disposé en position dépliée.

3. Brouette **(1)** selon la revendication précédente, **caractérisée en ce que** le châssis **(4)** comprend une partie **(13)** extrême, le moyen **(24)** de verrouillage étant monté pivotant selon un axe transversal passant par la partie **(13)** extrême.

4. Brouette **(1)** selon la revendication 2 ou 3, **caractérisée en ce que** le moyen **(24)** de verrouillage comprend une portion **(31)** de retenue, la portion **(31)** de retenue étant apte à encliqueter l'ensemble **(5)** de préhension lorsque l'ensemble **(5)** de préhension passe de la configuration dépliée à la configuration repliée.

5. Brouette **(1)** selon la revendication précédente, **caractérisée en ce que** le châssis comprend un segment **(30)** de liaison, la portion **(31)** de retenue définit une face **(33)** arquée complémentaire au profil du segment **(30)** de liaison de sorte à permettre au moyen **(24)** de verrouillage de s'encliqueter sur l'ensemble **(5)** de préhension.

6. Brouette **(1)** selon la revendication 4 ou 5, **caractérisée en ce que** le moyen **(24)** de verrouillage comprend une portion **(32)** amincie disposée à l'opposé de la portion **(31)** de retenue.

7. Brouette **(1)** selon l'une quelconque des revendications de 2 à 6, **caractérisée en ce que** le moyen **(24)** de verrouillage comprend un moyen de rappel exerçant un couple visant à rapprocher le moyen **(24)** de verrouillage du châssis **(4).**

8. Brouette **(1)** selon l'une quelconque des revendications précédentes, **caractérisée en ce que** l'ensemble **(5)** de préhension ainsi que le châssis **(4)** sont réalisés à partir de sections profilées tubulaires de même diamètre.

## Patentansprüche

1. Schubkarre (1), umfassend:
- einen Rahmen (4) zur Aufnahme eines Behälters (2), der für die Aufnahme einer Last geeignet ist,
- ein Rad (3), das in Bezug auf den Rahmen (4) drehbar ist, sodass die Schubkarre (1) rollen kann,
- eine sich in Bezug auf den Rahmen (4) drehende Greifbaugruppe (5), die sich zwischen einer ausgeklappten Position, die es dem Benutzer ermöglicht, die Schubkarre (1) zu rollen, und einer eingeklappten Position bewegt, wobei die Greifbaugruppe (5) zwei Holme (25) umfasst, die über ein Verbindungsmittel (26) verbunden sind, wobei die Greifbaugruppe (5) im Wesentlichen eine U-Form aufweist, wobei die Greifbaugruppe (5) einteilig ist,
- wobei der Rahmen (4) in Form eines durchgehenden Metallrohrs ausgeführt ist, wobei der Rahmen (4) einen äußersten Teil (13), einen Fußteil (14) und einen vorderen Teil (15) umfasst, wobei der Fußteil (14) gekrümmte Fußsegmente (19) umfasst, die es ermöglichen, die Schubkarre auf dem Boden abzustützen, wobei der äußerste Teil zwei Arme (20) umfasst, die sich ab den Fußsegmenten (19) erstrecken, wobei der Querabstand zwischen den Holmen (25) größer ist als der transversale Raumbedarf des Rahmens (4), sodass sich die Home (25) auf beiden Seiten des Rahmens (4) erstrecken, wobei die Greifbaugruppe (5) an zwei verschiedenen Stellen am Rahmen (4) anstößt, wenn die Greifbaugruppe (5) in zusammengeklappter Konfiguration ist.

2. Schubkarre **(1)** nach vorhergehendem Anspruch, **dadurch gekennzeichnet, dass** die Schubkarre **(1)** ein Verriegelungsmittel **(24)** umfasst, das geeignet ist, die Greifbaugruppe **(5)** gegen den Rahmen **(4)** gedrückt zu halten, wobei die Greifbaugruppe **(5)** fest mit dem Rahmen **(4)** verbunden ist, wenn in ausgeklappter Position angeordnet.

3. Schubkarre **(1)** nach vorhergehendem Anspruch, **dadurch gekennzeichnet, dass** der Rahmen **(4)** einen äußersten Teil **(13)** umfasst, wobei das Verriegelungsmittel **(24)** drehbar gemäß einer Querachse angebracht ist, die durch den äußersten Teil **(13)** verläuft.

4. Schubkarre (**1**) nach Anspruch 2 oder 3, **dadurch gekennzeichnet, dass** das Verriegelungsmittel (**24**) einen Halteabschnitt **(31)** umfasst, wobei der Halteabschnitt **(31)** dazu geeignet ist, die Greifbaugruppe **(5)** einzurasten, wenn die Greifbaugruppe **(5)** aus der ausgeklappten in die eingeklappte Konfiguration wechselt.

5. Schubkarre **(1)** nach vorhergehendem Anspruch, **dadurch gekennzeichnet, dass** der Rahmen ein Verbindungssegment **(30)** umfasst, der Halteabschnitt **(31)** eine zum Profil des Verbindungssegments **(30)** kompementäre gebogene Seite **(33)** definiert, sodass das Verriegelungsmittel **(24)** in die Greifbaugruppe **(5)** einrasten kann.

6. Schubkarre **(1)** nach Anspruch 4 oder 5, **dadurch gekennzeichnet, dass** das Verriegelungsmittel **(24)** einen gegenüber dem Halteabschnitt (31) angeordneten verjüngten Abschnitt **(32)** umfasst.

7. Schubkarre **(1)** nach einem der Ansprüche 2 bis 6, **dadurch gekennzeichnet, dass** das Verriegelungsmittel **(24)** ein Rückstellmittel umfasst, das ein Drehmoment ausübt, um das Verriegelungsmittel **(24)** dem Rahmen **(4)** anzunähern.

8. Schubkarre **(1)** nach einem der vorhergehenden Ansprüche, **dadurch gekennzeichnet, dass** die Greifbaugruppe **(5)** sowie der Rahmen **(4)** aus Rohrprofilabschnitten mit demselben Durchmesser hergestellt sind.

## Claims

1. A wheelbarrow (1) comprising:
- a frame (4) for receiving a container (2) capable of receiving a load,
- a wheel (3) capable of pivoting with respect to the frame (4), so as to allow the wheelbarrow (1) to be rolled,
- a gripping assembly (5) pivoting with respect to the frame (4), changing between an unfolded position capable of allowing the wheelbarrow (1) to be rolled by the user, and a folded position, the gripping assembly (5) comprising two poles (25) connected through a connecting means (26), the gripping assembly (5) having a substantially U-shape, the gripping assembly (5) being in one-piece,
- the frame (4) is in the form of a continuous metal tube, the frame (4) comprising an end part (13), a leg part (14) and a front part (15), the leg part (14) comprising curved leg segments (19) for supporting the wheelbarrow on the ground, the end part including two arms (20) extending from the leg segments (19), the transverse distance between the poles (25) is greater than the transverse overall size of the frame (4), so that the poles (25) extend on either side of the frame (4), the gripping assembly (5) abutting against the frame (4) in two separate locations when the gripping assembly (5) is in the folded configuration.

2. The wheelbarrow **(1)** according to the preceding claim, **characterised in that** the wheelbarrow **(1)** comprises a locking means **(24),** capable of holding the gripping assembly **(5)** pressed against the frame **(4),** the gripping assembly **(5)** being integral with the frame **(4)** when disposed in the unfolded position.

3. The wheelbarrow **(1)** according to the preceding claim, **characterised in that** the frame **(4)** comprises an end part **(13),** the locking means **(24)** being pivotally mounted along a transverse axis passing through the end part **(13).**

4. The wheelbarrow **(1)** according to claim 2 or 3, **characterised in that** the locking means **(24)** comprises a retaining portion **(31),** the retaining portion **(31)** being capable of snapping on the gripping assembly (5) when the gripping assembly (5) changes from the unfolded configuration to the folded configuration.

5. The wheelbarrow **(1)** according to the preceding claim, **characterised in that** the frame comprises a connecting segment **(30),** the retaining portion **(31)** defines an arcuate face **(33)** complementary to the profile of the connecting segment **(30)** so as to allow the locking means **(24)** to snap on the gripping assembly **(5).**

6. The wheelbarrow **(1)** according to claim 4 or 5, **characterised in that** the locking means **(24)** comprises a thinned portion **(32)** disposed opposite to the retaining portion **(31).**

7. The wheelbarrow **(1)** according to any of claims 2 to 6, **characterised in that** the locking means **(24)** comprises a return means exerting a torque for bringing the locking means **(24)** closer to the frame **(4).**

8. The wheelbarrow **(1)** according to any of the preceding claims, **characterised in that** the gripping assembly **(5)** and the frame **(4)** are made from tubular profiled sections with a same diameter.
